Europäisches Patentamt

European Patent Office

Office européen des brevets

(19)

(11) Veröffentlichungsnummer: **0 225 984**
**B1**

(12) **EUROPÄISCHE PATENTSCHRIFT**

(45) Veröffentlichungstag der Patentschrift: **16.01.91**

(51) Int. Cl.⁵: **B 23 Q 1/24**

(21) Anmeldenummer: **86114169.5**

(22) Anmeldetag: **14.10.86**

(54) **Selbstzentrierende Lünette.**

(30) Priorität: **19.12.85 DE 3544961**

(43) Veröffentlichungstag der Anmeldung:
**24.06.87 Patentblatt 87/26**

(45) Bekanntmachung des Hinweises auf die
Patenterteilung:
**16.01.91 Patentblatt 91/03**

(84) Benannte Vertragsstaaten:
**DE FR GB IT SE**

(56) Entgegenhaltungen:
**DE-A-3 303 041**
**DE-A-3 314 483**
**DE-C- 28 941**
**GB-A-2 089 708**
**US-A-2 160 378**
**US-A-3 736 114**

**SOVIET INVENTIONS ILLUSTRATED, Sektion
P/Q, Woche 8520, 26. Juni 1985, Derwent
Publications LTD, london, GB* KLASS P56, Nr.
85-121447/20* & SU-A-1122 466 (RYAZAN TOOL
CONS) 07-11-1984**

(73) Patentinhaber: **SMW Schneider & Weisshaupt
GmbH
Wiesentalstrasse 28
D-7996 Meckenbeuren (DE)**

(72) Erfinder: **Hiestand, Karl
Mühlweg 2
D-7798 Pfullendorf (DE)**

(74) Vertreter: **Engelhardt, Guido, Dipl.-Ing.
Patentanwalt Montafonstrasse 35 Postfach 1350
D-7990 Friedrichshafen 1 (DE)**

**Beschreibung**

Die Erfindung bezieht sich gemäß Oberbegriff von Patentanspruch 1 auf eine Lünette zum Aufspannen von stangenförmigen Werkstücken kreisförmigen Durchmessers auf einer Drehmaschine.

Eine selbstzentrierende Lünette dieser Art ist durch die DE—PS 33 14 483 bekannt. Um einen Versatz des Werkstückes bei unterschiedlichen Spanndrücken zu vermeiden, ist bei dieser Lünette zum Ausgleich der elastischen Durchbiegung der äußeren Halteglieder vorgesehen, daß in das mittlere Halteglied ein elastisch nachgiebiges Teil in Form einer axial deformierbaren Stange oder einer Tellerfeder mit weitgehend linearer Verformungskennlinie eingebaut wird, dessen Längenänderung gleich der Durchbiegung ist. Diese Ausführungsform einer Einrichtung zum Ausgleich der elastischen Verformung der Halteglieder ist jedoch nicht praktikabel, da einerseits das mit dem elastisch nachgiebigen Teil versehene mittlere Halteglied nicht mehr starr ist und somit Vibrationen, die sich ungünstig bei der Bearbeitung des Werkstückes auswirken, unvermeidbar sind und andererseits die tatsächliche Verformung des elastisch nachgiebigen Teils nicht definierbar ist. Mit dieser Einrichtung, die nicht einjustierbar ist, kann somit die elastische Verformung der Halteglieder, wenn überhaupt, nur unzureichend beeinflußt werden.

Aufgabe der Erfindung ist es daher, für eine selbstzentrierende Lünette der vorgenannten Art eine Einrichtung zum Ausgleich der elastischen Verformungen der beiden äußeren Halteglieder und auch der an deren Kraftübertragung beteiligten Bauteile der Lünette zu schaffen, die nicht nur einfach in der konstruktiven Ausgestaltung und leicht zu handhaben ist, sondern mittels der auch in kurzer Zeit, ohne daß technische Schwierigkeiten auftreten, ein durch die Verformungen der äußeren Halteglieder sowie sämtlicher mit diesen zusammenwirkenden Bauteile bedingter Versatz eines Werkstückes zu kompensieren ist. Des weiteren soll eine Wiederholspanngenauigkeit für die jeweiligen Spanndrücke bei äußerst einfacher Einstellbarkeit gegeben sein.

Gemäß der Erfindung wird dies durch die kennzeichnenden Merkmale au einer Lünette gemäß Patentanspruch 1 erreicht.

Dies kann in einfacher Ausgestaltung derart bewerkstelligt werden, daß das mittlere Halteglied drehfest z.B. mittels des Verstellgliedes verschiebbar geführt und über ein Gewinde, eine Kugelrollspindel oder einem ähnlichen Übertragungsmittel mit einem Steuerglied verbunden ist, das durch den Betätigungskolben verschiebbar und mittels eines Stellgliedes verdrehbar ist.

Hierbei ist es zweckmäßig, das Steuerglied durch eine abgesetzte und/oder mit einem Flansch versehene Stange zu bilden, an der vorzugsweise mittig der Betätigungskolben abgestützt ist und an deren einem Ende das mittlere Halteglied mittels des Gewindes verstellbar und an deren anderen Ende das Stellglied angebracht ist.

Das Stellglied kann in einfacher Weise aus einem Handrad oder einem Hebel gebildet sein, das drehfest mit dem Steuerglied verbunden und dem eine an dem dem Betätigungskolben aufnehmenden Zylinder angebrachte druckabhängige Stellungsanzeige zugeordnet ist. Es ist aber auch möglich, dazu einen mit einem Impulsgeber versehenen Schrittmotor vorzusehen, dessen Verdrehwege mittels eines Impulszählers feststellbar und in einem Rechenwerk speicherbar sind.

Nach einer andersartigen Ausgestaltung kann zur Einstellung der Wegstrecke dem mittleren Halteglied ein gegenüber dem Verstellglied axial verstellbarer und einstellbarer Anschlag zugeordnet werden, der zweckmäßigerweise durch eine Stange gebildet und mittels eines Gewindes an dem Betätigungskolben verstellbar gehalten ist.

Bei einer Lünette für zwei unterschiedlich hohe Spannkräfte ist es ferner angezeigt, daß in den Zylinder des Betätigungskolbens ein weiterer der hohen Spannkraft zugeordneter Kolben eingesetzt ist, der mit dem Verstellglied fest verbunden und bei dessen Beaufschlagung die Verstellung des Verstellgliedes gegenüber dem mittleren Halteglied eliminierbar ist.

Die gemäß der Erfindung ausgebildete Einrichtung zum Ausgleich der elastischen Verformung der äußeren Halteglieder sowie der weiteren an deren Kraftübertragung beteiligten Bauteile der Lünette ist einfach in ihrem Aufbau und somit auch wirtschaftlich herzustellen, vor allem aber leicht zu handhaben und gewährleistet, daß eine Kompensation der elastischen Verformung jeweils in kurzer Zeit und äußerst exakt vorzunehmen ist. Wird nämlich das Verstellglied gegenüber dem mittleren Halteglied zur Einjustierung unter Last um eine einstellbare Wegstrecke und somit definiert verstellbar angeordnet, so ist es leicht möglich, einen bei hohen Spannkräften auftretenden Versatz eines Werkstückes durch eine Lageänderung des mittleren Haltegliedes auszugleichen. Dazu ist lediglich z.B. ein Handrad so lange zu verdrehen, bis durch eine Zurücknahme des mittleren Haltegliedes das eingespannte Werkstück zentrisch gehalten ist. Und wird in dieser Stellung des Handrades dessen druckabhängiger Verdrehweg markiert bzw. wird der entsprechende Verdrehweg eines Schrittmotors gespeichert, sind bei Wiederholspannungen die Werkstücke stets zentrisch eingespannt.

Der Bauaufwand, der erforderlich ist, um dies zu bewerkstelligen, ist gering, da nur wenige Bauteile zu verändern sind. Auch wird die Baugröße der Lünette nicht beeinträchtigt, insbesondere ist aber von Vorteil, daß bei jeder Lünette bei äußerst einfacher Handhabung individuell ein Ausgleich sämtlicher Deformierungen vorzunehmen ist und somit die Elastizität der unterschiedlichen Werkstoffe ebenfalls kompensiert werden kann.

In der Zeichnung sind einige Ausführungsbeispiele der bei einer selbstzentrierenden Lünette einsetzbaren gemäß der Erfindung ausgebildeten Einrichtung zum Ausgleich der elastischen Verformungen der beiden äußeren Halteglieder sowie der weiteren an deren Kraftübertragung beteiligten Bauteile der Lünette dargestellt, die nachfolgend im einzelnen erläutert sind. Hierbei zeigen:

Fig. 1 eine Lünette, bei der das Verstellglied gegenüber dem mittleren Halteglied durch ein Gewinde axial mittels eines Handrades verstellbar ist,

Fig. 2 die Stellungsanzeige des Verstellgliedes für unterschiedliche Drücke bei der Lünette nach Figur 1,

Fig. 3 die Lünette nach Figur 1 mit einem Schrittmotor als Stellglied und

Fig. 4 eine mit zwei Betätigungskolben versehene Lünette und einem axial verschiebbaren Anschlag zur Einstellung der Lageänderung zwischen dem Verstellglied und dem mittleren Halteglied.

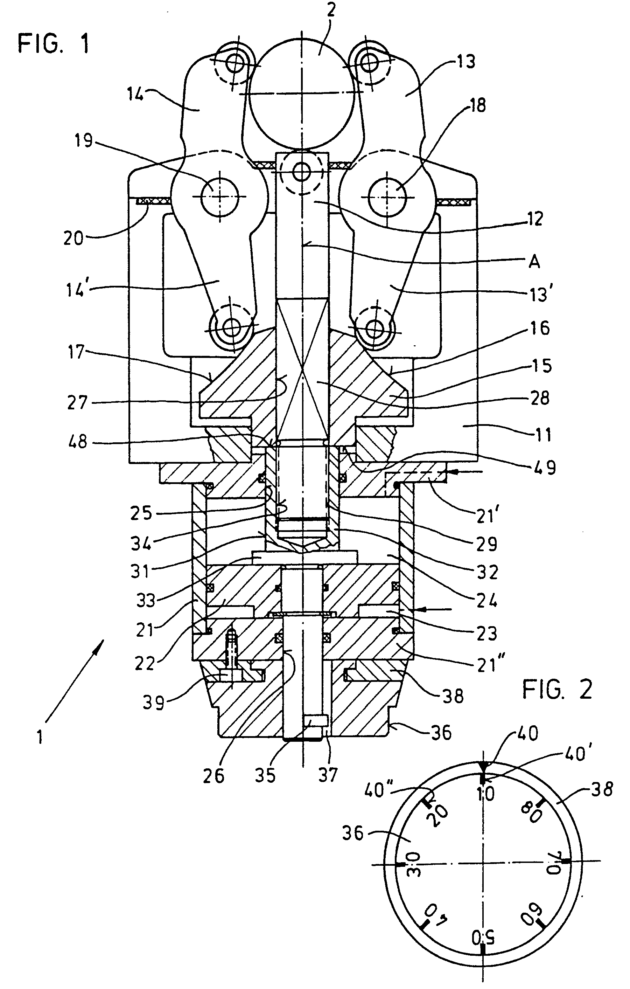

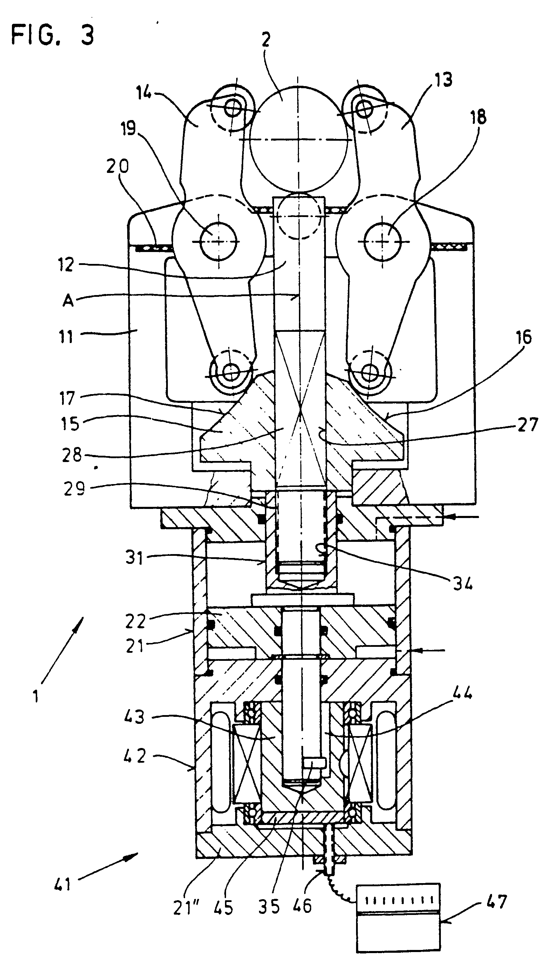

Die in den Figuren 1 und 3 dargestellte und jeweils mit 1 bezeichnete selbstzentrierende Lünette dient zum Aufspannen und/oder zur Halterung von stangenförmigen Werkstücken 2 und besteht jeweils aus drei in einem Gehäuse 11 eingesetzten in einer Ebene angeordneten Haltegliedern 12, 13 und 14, wobei die beiden äußeren Halteglieder 12 und 13 als spiegelbildlich zueinander angeordnete Winkelhebel ausgebildet und um Gelenkbolzen 18 und 19 verschwenkbar gelagert sind. Das in Richtung auf die Achse des Werkstückes 2 verstellbare Halteglied 12 ist hierbei mit einem Verstellglied 15 in Form eines Prismas versehen, an dem Steuerflächen 16 und 17 angebracht sind, mit denen die freien Enden 13' und 14' der Halteglieder 13 und 14 zusammenwirken. Mittels einer Dichtung 20 ist das Gehäuse 11, das ohne Abschlußdeckel gezeigt ist, an der dem Werkstück 2 zugekehrten Seite abgedichtet.

Zur Betätigung der Halteglieder 12, 13 und 14 dient ein Betätigungskolben 22, der in einem an dem Gehäuse 11 angeflanschten Zylinder 21 eingesetzt ist. Wird dem Druckraum 23 bei der Betriebsstellung nach Fig. 1 Druckmittel zugeführt, so werden der Betätigungskolben 22, das mit diesem verbundene mittlere Halteglied 12 sowie das Verstellglied 15 nach oben verschoben, so daß das mittlere Halteglied 12 und die beiden äußeren Halteglieder 13 und 14 gegen das eingelegte Werkstück 2 gedrückt werden und dieses somit in der Lünette 1 eingespannt ist. Bei einer Druckmittelzuführung in den Druckraum 24 wird dagegen die Lünette 1 geöffnet und das Werkstück 2 kann entnommen werden.

Um bei hohen Spannkräften die elastischen Verformungen der äußeren Halteglieder 13 und 14 sowie der weiteren an deren Kraftübertragung beteiligten Bauteile der Lünette 1 ausgleichen und das Werkstück 2 somit dennoch zentrisch spannen zu können, sind besondere Maßnahmen getroffen, durch die gewährleistet ist, daß auf einfache Weise eine Kompensation der Verformungen vorgenommen werden kann. Dies ist in der Weise zu bewerkstelligen, daß das Verstellglied 15 gegenüber dem mittleren Halteglied 12 unter Last in dessen Längsrichtung A um eine einstellbare Wegstrecke, die der jeweiligen Summe der Verformungen der äußeren Halteglieder 13 und 14 sowie der weiteren an deren Kraftübertragung beteiligten Bauteile der Lünette 1 entspricht, verstellbar ist.

Dazu dient bei der Lünette 1 nach den Figuren 1 und 3 ein verdrehbares Steuerglied 31 in Form einer Stange 32, die an dem einen Ende eine Gewindebohrung 34, in die mittels eines Gewindes 29 das mittlere Halteglied 13 eingeschraubt ist, aufweist und mit deren anderen Ende ein Stellglied 36 drehfest verbunden ist. Das Steuerglied 31 durchgreift die in die Zylinderdeckel 21' und 21'' eingearbeiteten Bohrungen 25 und 26 und an dessen dem Verstellglied 15 zugekehrten Stirnseite 48 liegt dieses an der Fläche 49 des Verstellgliedes 16 an. Außerdem ist an dem Steuerglied 31 ein Flansch 33 angeformt, an dem der Betätigungskolben 22 abgestützt ist. Mittels eines Keiles 35, der in einer in das Stellglied 36 eingearbeiteten Nut 37 axial geführt ist, ist das Steuerglied 31 drehfest mit dem Stellglied 36 gekoppelt.

Wird das Stellglied 36 verdreht, so werden das mittlere Halteglied 12 und das Verstellglied 15 in Richtung der Längsachse A zueinander verstellt. Dazu ist das mittlere Halteglied 12 mittels eines rechteckigen Führungsteils 28 unverdrehbar in einer Ausnehmung 27 des Verstellgliedes 15 geführt.

Soll das Werkstück 2 mit einer hohen Spannkraft zwischen den Haltegliedern 12, 13 und 14 eingespannt werden, so wird dieses, sofern keine besonderen Maßnahmen zum Ausgleich der Verformungen der beiden äußeren Halteglieder 13 und 14 sowie der anderen, an der Kraftübertragung beteiligten Bauteile, wie z.B. der Gelenkbolzen 18, 19, des Gehäuses 11, des Verstellgliedes 15, der Rollen und der diese tragenden Bolzen getroffen werden, da deren Verformungen aufgrund der Biegebeanspruchung größer ist als die des nur auf Druck beanspruchten mittleren Haltegliedes 12, außermittig eingespannt werden. Die äußeren Halteglieder 13 und 14 würden dabei aufgebogen und durch das mittlere Halteglied 12 würde das Werkstück 2 mehr oder weniger aus dem Zentrum der Lünette 1 herausgedrückt werden. Wird aber das Verstellglied 15 bei einer auf das Werkstück 2 einwirkenden hohen Spannkraft gegenüber seiner Lage, die es bei einer Einspannung mit einer niederen Spannkraft, in der eine zentrische Einspannung gegeben ist, einnimmt vorgesetzt, so daß die äußeren Halteglieder 13 und 14 eine größere Zustellbewegung ausführen, so kann der Versatz des Werkstückes 2 ausgeglichen werden.

Dies wird bei der Ausgestaltung nach Figur 1 in der Weise bewerkstelligt, daß durch Verdrehen des Stellgliedes 36 und des Steuergliedes 31 mittels des Gewindes 29 das Halteglied 12 in die Gewindebohrung 34 hineingeschraubt wird. Das Verstellglied 15 wird somit, da dieses mit der Fläche 49 an der Anlagefläche 48 abgestützt ist, um diesen Verstellweg in Relation zum Halteglied 12 vorgestellt.

In der Praxis wird die Justierung für ein Werkstück in der Weise erfolgen, daß das Werkstück 2 zunächst mit einer Spannkraft, durch die keine elastischen Verformung der äußeren Halteglieder 13 und 14 und der anderen Bauteile hervorgerufen wird, eingespannt wird. Für diesen Betriebszustand wird an dem Stellglied 36, wie dies in Figur 2 dargestellt ist, eine Markierung 40′ gesetzt, die mit einer an einer Scheibe 38, die mittels Schrauben 39 fest an dem Zylinderdeckel 21″ befestigt ist, fluchtet. Sodann wird in dem Druckraum 23 der Druck des Druckmittels derart erhöht, daß eine vorgebene höhere Spannkraft erzielt wird. Das Werkstück 2 nimmt nunmehr, da die beiden äußeren Halteglieder 13 und 14 aufgebogen sind und weitere Verformungen auftreten, eine außermittige Lage ein. Werden nunmehr das Stellglied 36 und das mit diesem über den Keil 35 fest verbundene Steuerglied 31 derart verdreht, daß das Halteglied 12 zurückwandert, so wird das Werkstück 2 in das Zentrum der Lünette 1 zurückgeführt. Ist dieses durch Vorsetzen des Verstellgliedes 15 gegenüber dem mittleren Halteglied 12 um eine der elastischen Verformungen entsprechenden definierten Wegstrecke zentrisch eingespannt, wird eine weitere mit der Markierung 40 fluchtende Markierung, z.B. die Markierung 40″, gesetzt.

Bei einer erneuten Einspannung eines Werkstückes vorzugsweise gleichen Durchmessers mit gleicher Spannkraft ist demnach lediglich vor dem Spannvorgang das Stellglied 36 derart zu verdrehen, daß dessen Markierung 40″ mit der Markierung 40 der Scheibe 38 korrespondiert. Eine zentrische Einspannung ist in diesem Fall, da durch die Lage- änderung des Verstellgliedes 15 die elastische Verformung der beiden äußeren Halteglieder 13 und 14 sowie der weiteren an der Kraftübertragung beteiligten Bauteile der Lünette 1 ausgeglichen ist, sichergestellt.

Bei dem Ausführungsbeispiel nach Figur 3 ist als Stellglied 41 ein elektrischer Stellmotor 42 vorgesehen, der an dem Zylinder 21 angebaut ist, in dessen Nabe 43 das Steuerglied 31 eingreift. Mittels des Keiles 35 ist das Steuerglied 31 hierbei drehfest, aber axial verschiebbar, in der Nut 44 der Nabe 43 gehalten.

Um eine Justierung vorzunehmen, ist in dem Zylinderdeckel 21″ ein Impulsgeber 46 eingesetzt, der mit einem an der Stirnseite der Nabe 43 angebrachten Schrittzählwerk 45 als Impulsgeber zusammenwirkt und der an ein Rechenwerk 47 angeschlossen ist. Für den vorgegebenen Spanndruck ist mittels des Stellmotors 42, durch den auch die Verdrehung des Steuergliedes 31 zum Ausgleich des Werkstückversatzes bei der Justierung vorgenommen wird, vor Beginn eines Spannvorganges die entsprechende Verdrehung des Steuergliedes 31 und damit der Rückversatz oder die Verstellung des Verstellgliedes 15 kurzfristig zu bewerkstelligen. Mit der in Figur 3 dargestellten Ausgestaltung ist demnach ein automatischer Ausgleich der elastischen Verformung der äusseren Halteglieder 13 und 14 problemlos vorzunehmen.

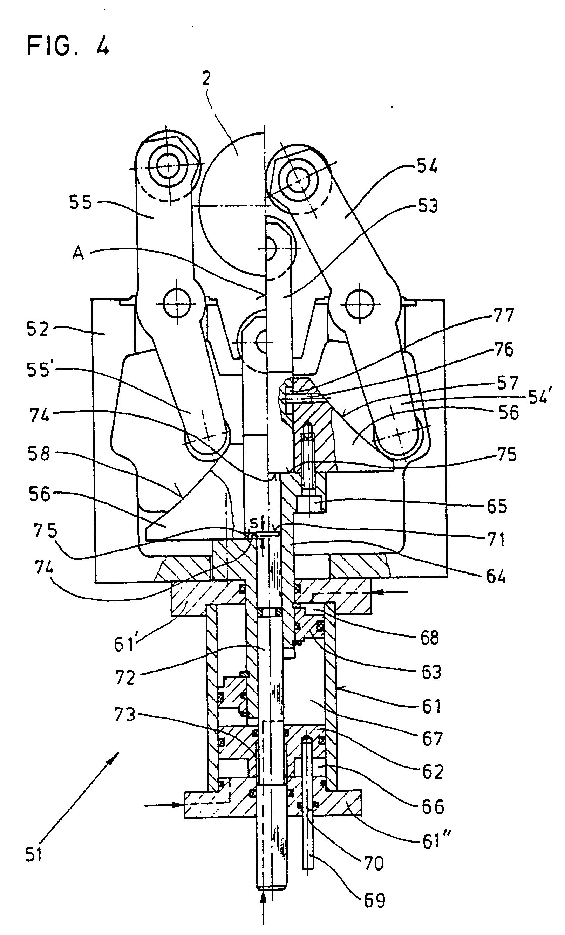

Bei der in Figur 4 gezeigten selbstzentrierenden Lünette 51 ist dem mit Steuerflächen 57 und 58 versehenen Verstellglied 56 ein in Achsrichtung A des mittleren Haltegliedes 53 verstellbarer Anschlag 71 zugeordnet, mittels dem eine Wegstrecke s einstellbar ist, um die die Lage des Verstellglied 56 gegenüber dem mittleren Halteglied 53 veränderbar ist, um einen außermittigen Versatz des Werkstückes 2 bei einer Einspannung mit hoher Spannkraft auszugleichen. Auch bei diesem Ausführungsbeispiel werden die in einem Gehäuse 52 verschwenkbar eingesetzten äußeren Halteglieder 54 und 55 durch das Verstellglied 56, da deren Enden 54′ und 55′ mit den Steuerflächen 57 bzw. 58 zusammenwirken, verschwenkt.

Der Anschlag 71 ist durch eine Stange 72 gebildet, die an dem in einem angeflanschten Zylinder 61 eingesetzten Betätigungskolben 62 befestigt ist. Mittels eines Gewindes 73 ist die Stange 72 verstellbar mit dem Betätigungskolben 62 verbunden, der durch einen Stift 69, der in einer in den Zylinderdeckel 61″ eingearbeiteten Bohrung 70 verschiebbar geführt ist, gegen Verdrehung gesichert ist.

In den zylinder 61 ist bei diesem Ausführungsbeispiel ein weiterer Kolben 63 eingesetzt, dessen Kolbenstange 64 den Zylinderdeckel 61′ durchgreift und mittels Schrauben 65 an dem Verstellglied 56 befestigt ist.

Bei einer Einspannung des Werkstückes 2 mit geringer Spannkraft, um z.B. Schlichtarbeiten auszuführen, wird dem Druckraum 66 Druckmittel zugeführt. Dadurch werden beide Betätigungskolben 62 und 63 und damit das mittlere Halteglied 53 sowie das Verstellglied 56 in Richtung auf das Werkstück 2 verschoben. Das Verstellglied 56 nimmt dabei, wie dies in der linken Hälfte der Figur 4 gezeigt ist, eine derartige Lage ein, daß die Anlagefläche 75 der Kolbenstange 64 nicht an der Gegenfläche 74 des mittleren Haltegliedes 53 anliegt, die Flächen 74 und 75 sind vielmehr um die Wegstrecke s gegeneinander versetzt. Dies wird mittels des Anschlages 71 bewerkstelligt, an dem die Anlagefläche 74 des mittleren Haltegliedes 53 abgestützt ist.

Wird dagegen dem Druckraum 67 Druckmittel hohen Druckes zugeführt, so wird der Betätigungskolben 63 in Richtung auf das Werkstück 2 verschoben. Durch dessen Kolbenstange 64 wird dabei, da diese sich mit der Fläche 75 an der Fläche 74 des mittleren Haltegliedes 53 anlegt (Fig. 4, rechte Hälfte), dieses mitgenommen, allerdings um die Wegstrecke S zurückgesetzt, die dem Ausgleich der elastischen Verformung der beiden Halteglieder 54 und 55 sowie der weiteren an deren Kraftübertragung beteiligten Bauteile der Lünette 51 entspricht. Auch bei einer Einspannung mit hoher Spannkraft, um z.B. Schrupparbeiten auszuführen, ist demnach keine Auslenkung des Werkstückes 2 in Kauf zu nehmen. Durch Zuführung von Druckmittel in den Druckraum 68 kann die Lünette 1 geöffnet und das Werkstück 2 entnommen werden. Durch einen in das Verstellglied 56 eingesetzten Sicherungsstift 76, der in eine in das mittlere Halteglied 53 eingearbeitete Längsnut 77 eingreift, wird dieses bei einer Rückführung mitgenommen.

## Patentansprüche

1. Lünette zum zentrischen Aufspannen von stangenförmigen Werkstücken kreisförmigen Durchmessers auf einer Drehmaschine mit drei in einer gemeinsamen Ebene angeordneten Haltegliedern, deren jeweiligen Berührungsort gleichen Abstand von der Werkstückachse hat und von denen die zwei äußeren Halteglieder als spiegelbildlich zueinander angeordnete schwenkbar gelagerte Winkelhebel ausgebildet sind, wobei an dem mittleren in Bezug auf das Werkstück radial durch einen von Druckmittel beaufschlagbaren Betätigungskolben verstellbaren Halteglied ein Verstellglied in Form eines mit Steuerflächen versehenes Prisma angebracht ist, das mit den freien Enden der Winkelhebel zusammenwirkt, und wobei zum Ausgleich der elastischen Verformung der beiden äußeren Halteglieder, sowie der weiteren an deren Kraftübertragung beteiligten Bauteile der Lünette (1; 51) das Verstellglied (15; 56) gegenüber dem mittleren Halteglied (12; 53) in dessen Längsrichtung unter Last verstellbar angeordnet ist, dadurch gekennzeichnet, daß bei der Einstellung der Lünette 1; 51) auf ein einzuspannendes Werkstück (2) das Verstellglied (15; 56) um einen der Summe der unter der jeweiligen Last auftretenden Verformungen entsprechenden Wegs (Verstellbereich S) gegenüber dem mittleren Halteglied (12; 53) definiert verstellbar ist.

2. Lünette nach Anspruch 1, dadurch gekennzeichnet, daß das mittlere Halteglied (12) drehfest z.B. mittels des Verstellgliedes (15) geführt und über ein Gewinde (29, 34), eine Kugelrollspindel oder ein ähnliches Übertragungsmittel mit einem Steuerglied (31) verbunden ist, das durch den Betätigungskolben (22) verschiebbar und mittels eines Stellgliedes (36) verdrehbar ist.

3. Lünette nach Anspruch 2, dadurch gekennzeichnet, daß das Steuerglied (31) durch eine abgesetzte und/oder mit einem Flansch (33) versehene Stange (32) gebildet ist, an der vorzugsweise mittig der Betätigungskolben (22) abgestützt ist und an deren einem Ende das mittlere Halteglied (12) mittels des Gewindes (29, 34) verstellbar und an deren anderen Ende das Stellglied (36) angebracht ist.

4. Lünette nach Anspruch 3, dadurch gekennzeichnet, daß das Stellglied (36) aus einem Handrad oder einem Hebel gebildet ist, das drehfest mit dem Steuerglied (31) verbunden und dem eine an dem Betätigungskolben (22) aufnehmenden Zylinder (21) angebrachte druckabhängige Stellungsanzeige (40) zugeordnet ist.

5. Lünette nach Anspruch 3, dadurch gekennzeichnet, daß das Stellglied (41) durch einen mit einem Impulsgeber (45) versehenen Schrittmotor (42) gebildet ist, dessen Verdrehwege mittels eines Impulszählers (46) feststellbar und in einem Rechenwerk (47) speicherbar sind.

6. Lünette nach Anspruch 1, dadurch gekennzeichnet, daß bei einer auf zwei unterschiedlich hohe Spanndrücke ausgelegten Lünette (51) zur Einstellung des Weges dem mittleren Halteglied (53) ein gegenüber dem Verstellglied (56) in einem maximalen Verstellbereich (S) axial verstell- und einstellbarer Anschlag (71) zugeordnet ist.

7. Lünette nach Anspruch 6, dadurch gekennzeichnet, daß der Anschlag (71) durch eine Stange (72) gebildet ist, die mittels eines Gewindes (73) verstellbar an dem Betätigungskolben (62) gehalten ist.

8. Lünette nach Anspruch 6 oder 7, dadurch gekennzeichnet, daß bei einer Lünette (51) für zwei unterschiedlich hohe Spannkräfte in den Zylinder (61) des Betätigungskolbens (62) ein weiterer der hohen Spannkraft zugeordneter Kolben (63) eingesetzt ist, der mit dem Verstellglied (56) fest verbunden und bei dessen Beaufschlagung die Verstellung (Wegstrecke S) des Verstellgliedes (56) gegenüber dem mittleren Halteglied (53) eliminierbar ist.

## Revendications

1. Lunette pour le centrage de pièces à usiner sous la forme de barres à section circulaire, sur un banc équipé de trois éléments de serrage disposés dans un plan commun, dont les points de contact se trouvent à distances égales de l'axe de la pièce à usiner, dont les deux éléments extérieurs constituent des leviers angulaires symétriques orientables et dont l'élément de serrage central qui, à l'aide d'un piston d'actionnement soumis à un médium de pression, se laisse déplacer radialement par rapport à la pièce à usiner, porte un élément de réglage sous la forme d'un prisme muni de faces de commande collaborant avec les extrémités libres des leviers angulaires, l'équilibrage de la déformation plastique des éléments extérieurs ainsi que des autres composants de la lunette (1; 51) participant à la transmission de force étant réalisé tel que l'élément de réglage (15; 56) face à l'élément de serrage central (12; 53) déplaçable sous charge en direction longitudinale, se caractérise par le fait que lors de l'ajustement de la lunette (1; 51) sur une pièce à usiner (2) l'élément de réglage (15; 56) se laisse déplacer par rapport à l'élément de serrage central (12; 53), sur une course (plage de réglage S) correspondant à la somme des déformations provoquées par les charges respectives.

2. Lunette d'après la revendication 1, se caractérisant par le fait que l'élément de serrage central (12) est protégé contre les torsions et guidé p. ex. par l'élément de réglage (15) et lié à un membre de commande (31) par l'intermédiaire d'un filet (29, 34), d'une broche filetée à billes ou d'un élément de transmission semblable, qui est déplacé par le piston d'actionnement (22) et tourné à l'aide d'un membre de réglage (36).

3. Lunette d'après la revendication 2, se caractérisant par le fait que le membre de commande (31) est constitué d'une tige à déport (32) ou munie d'une bride (33), de préférence au centre de laquelle s'appuie le piston d'actionnement (22) et dont une extrémité porte l'élément de serrage central (12) réglable au moyen du filet (29, 34), et l'autre le membre de réglage (36).

4. Lunette d'après la revendication 3, se caractérisant par le fait que le membre de réglage (36) est constitué d'une roue à main ou d'un levier fixé au membre de commande (31) et auquel est attribué une indication de position (40) soumise à la pression, cette dernière étant montée sur le cylindre (21) recevant le piston d'actionnement (22).

5. Lunette d'après la revendication 3, se caractérisant par le fait que le membre de réglage (41) est constitué d'un moteur pas à pas (42) équipé d'un impulseur (45) dont les courses de rotation se laissent déterminer à l'aide d'un compteur à impulsions (46) puis mémoriser dans un calculateur (47).

6. Lunette d'après la revendication 1, se caractérisant par le fait que, dans le cas d'une lunette (51) conçue pour deux pressions de serrage différentes, il est attribué à l'élément de serrage central (53) une butée (71) réglable dans une plage de réglage maxi (S) en direction axiale par rapport à l'élément de réglage (56).

7. Lunette d'après la revendication 6, se caractérisant par le fait que la butée (71) est formée par une tige (72) montée à l'aide d'un filet (73) d'une manière réglable sur le piston d'actionnement (62).

8. Lunette d'après les revendications 6 ou 7, se caractérisant par le fait que dans le cas d'une lunette (51) conçue pour deux forces de serrage différentes, il est prévu dans le cylindre (61) du piston d'actionnement (62) un autre piston (63) affecté à la force de serrage élevée, lié rigidement à l'élément de réglage (56) et dont la mise sous pression permet d'annuler le déplacement (course S) de l'élément de réglage (56) par rapport à l'élément de serrage central (53).

**Claims**

1. Collar plate for centric holding of rod-shaped workpieces of circular cross-section on a turning machine, having three holding members in a common plane whose contact points are equidistant from the component centre, whereby the two outermost holding members are arranged as diametrically-opposed, pivot-mounted, angled levers and whereby a prism-shaped adjusting member with control faces is radially mounted on the central holding member which can be adjusted by means of an actuating piston operated by a pressure medium, causing the prism to act on the two free ends of the angled levers and whereby, to compensate for elastic distortion of the outer holding members and of the other force-transmitting components of the collar plate (1; 51), the adjusting member (15; 56) is arranged on the holding member (12; 53) in such a way that it can be adjusted in a longitudinal direction when a load is applied and characterized in that, when the collar plate (1; 51) is set to accommodate a workpiece (2), the adjusting member (15; 56) can be adjusted relative to the central holding member (12; 53) in a defined way such that travel (adjustment range S) equates to the sum of any distortion occurring under a given applied load.

2. Collar plate as claimed in claim 1, characterized in that the central holding member (12) is firmly guided by, for example, the adjusting member (15), and is connected by means of a thread (29; 34), a ball roller spindle or some similar transmitting element to a control member (31) which can be displaced by the actuating piston (22) and which can be rotated by means of an adjusting member (36).

3. Collar plate as claimed in claim 2, characterized in that the control member (31) is arranged as an offset rod (32) which may or may not be fitted with a flange (33) which preferably supports the actuating piston (22) centrally and is capable of adjusting the central holding member (12) with a thread (29, 34) at one end while having an adjusting member (36) arranged at the other end.

4. Collar plate as claimed in claim 3, characterized in that the adjusting member (36) is arranged as a handwheel or a lever firmly attached to a control member (31) to which a pressure-dependent setting indicator (40) is allocated which is itself arranged on the cylinder (21) which receives the actuating piston (22).

5. Collar plate as claimed in claim 3, characterized in that the adjusting member (41) is arranged as a stepping motor (42) with an impulse sensor (45), the torsional travel of which can be determined using an impulse counter (46) and stored in a calculating device (47).

6. Collar plate as claimed in claim 1, characterized in that on a collar plate (51) designed for two different clamping pressures, an axially adjustable and settable stop (71) is arranged opposite the adjusting member (56) for adjusting the travel of the central holding member (53).

7. Collar plate as claimed in claim 6, characterized in that the stop (71) is arranged as a rod (72) which is located on the actuating piston (62) by means of an adjustable thread (73).

8. Collar plate as claimed in claim 6 or 7, characterized in that on a collar plate (51) designed for two different clamping pressures, another piston (63) for the high clamping pressure is installed in the cylinder (61) of the actuating piston (62) which is rigidly mounted on the adjusting member (56) and which, when actuated, can eliminate the adjustment (adjustment travel S) of the adjusting member (56) relative to the central holding member (53).

FIG. 1

2

13

14

18

19

20

12

A

14'

13'

17

16

27

15

48

28

11

49

25

21'

34

29

31

32

33

24

21

23

22

21"

39

38

1

FIG. 2

36

26    35    37

40

40'

40"

10

20

80

36

30

70

40

60

50

38

FIG. 3

FIG. 4